(19) **Europäisches Patentamt / European Patent Office / Office européen des brevets**

(11) **EP 4 307 003 A1**

(12) # EUROPEAN PATENT APPLICATION
published in accordance with Art. 153(4) EPC

(43) Date of publication:
**17.01.2024 Bulletin 2024/03**

(21) Application number: **21935440.4**

(22) Date of filing: **19.08.2021**

(51) International Patent Classification (IPC):
**G01S 13/937** (2020.01)

(52) Cooperative Patent Classification (CPC):
**Y02A 90/10**

(86) International application number:
**PCT/CN2021/113493**

(87) International publication number:
**WO 2022/213527 (13.10.2022 Gazette 2022/41)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **06.04.2021 CN 202110364633**

(71) Applicant: **CSSC Marine Technology Co., Ltd.**
**Shanghai 200136 (CN)**

(72) Inventors:
• **HU, Jie**
  **Shanghai 200136 (CN)**
• **ZHANG, Qiming**
  **Shanghai 200136 (CN)**
• **WANG, Hongxian**
  **Shanghai 200136 (CN)**
• **SUN, Weikang**
  **Shanghai 200136 (CN)**
• **HU, Wenmei**
  **Shanghai 200136 (CN)**
• **XU, Chang**
  **Shanghai 200136 (CN)**
• **GAO, Ge**
  **Shanghai 200136 (CN)**
• **WEN, Jianxin**
  **Shanghai 200136 (CN)**
• **HOU, Bo**
  **Shanghai 200136 (CN)**
• **GUO, Fuhai**
  **Shanghai 200136 (CN)**

(74) Representative: **Ipside**
**7-9 Allées Haussmann**
**33300 Bordeaux Cedex (FR)**

(54) **PRECIPITATION CLUTTER SUPPRESSION ALGORITHM FOR MARINE RADAR**

(57) The present invention relates to a rain and snow clutter suppression algorithm for marine radar. The algorithm includes reading scan line data, reading rain and snow clutter suppression parameters, establishing sliding window matrix I and sliding window matrix II, calculating the average amplitude within sliding window matrix I, and calculating the weighted rain and snow clutter amplitude for all points on the current scan line based on the average amplitude within sliding window matrix I and the average amplitude within sliding window matrix II. The algorithm further calculates the post-clutter suppression amplitude for the current scan line. With this algorithm, the estimated rain and snow clutter values are closer to the actual echo characteristics of rain and snow clutter, while preserving the amplitude of target echoes. It can effectively suppress rain and snow clutter while minimizing the impact on targets.

EP 4 307 003 A1

FIG. 1

**Description**

**Technical Field**

The present invention relates to the field of marine radar, specifically a precipitation clutter suppression algorithm for marine radar.

**Background Art**

Marine radar is a core navigation equipment that operates 24/7 and in all weather conditions. It serves as the "eyes" of ship navigation and is crucial for national defense and maritime safety. Especially in rainy and snowy weather conditions, visual perception is poor, and the reliance on marine radar is higher. However, the detection and tracking performance of marine radar are often affected by electromagnetic waves scattered by rain, snow, and low-level cloud surfaces. The electromagnetic waves scattered by rain, snow, and clouds are also known as rain and snow clutter. The presence of rain and snow clutter can increase false alarm probability or decrease the detection probability of targets under constant false alarm rate conditions.

In order to correctly distinguish targets from the surrounding environment under the interference of rain and snow clutter during marine navigation, marine radars usually provide manual and automatic methods for rain and snow suppression. Due to the poor adaptability of automatic suppression algorithms, they generally provide equivalent and uniformly invariant suppression under different meteorological conditions. However, the marine environment is constantly changing, and relying solely on automatic suppression cannot meet user requirements. Therefore, manual input of suppression control parameters is commonly used in marine navigation radars.

Existing rain and snow clutter suppression algorithms for marine radar mainly include median filtering, sensitivity time control (STC), and constant false alarm rate (CFAR) processing. Among them, median filtering directly processes radar echoes by taking the median value, eliminating the interference of pulse-like clutter, and reducing the false alarm probability of isolated points. However, when the distribution of rain and snow clutter is relatively uniform, the filtering effect is not satisfactory. STC control utilizes the characteristic that the farther the rain and snow interference distance, the stronger the reflection performance, and applies STC control to the echo data. However, in practical use, it requires adjusting multiple parameters and has poor adaptability to scene changes. CFAR processing estimates the size of rain and snow clutter by estimating clutter within a sliding window range and detects targets after amplitude filtering. However, under conditions of heavy rain or low-level thick cloud layers, the rain and snow clutter echo intensity and the echo intensity of small targets are close, and excessive suppression can cause small targets to be suppressed, while insufficient suppression results in small targets being submerged in rain and snow clutter, which affects navigation safety.

Existing techniques, such as patent document with application number CN201910656437.3, disclose a rain and snow clutter suppression method for FOD radar under complex weather conditions. Although it also deals with rain and snow clutter, its application scenario mainly focuses on surface rain in areas where ground clutter interference is the main factor, and the usage scenario is not suitable for maritime navigation.

Patent document with application number CN201410375937.7 discloses a rain and snow interference suppression method based on mobile summation deviation and STC control. This method attenuates the mobile summation deviation coefficient significantly when there are large continuous strong echoes to suppress rain and snow interference with wool-like distribution. On the other hand, the STC curve control sets a low detection threshold for nearby targets and gradually increases the weighting value for distant targets, which also achieves good suppression of rain and snow. However, this method is largely limited by the characteristics of the STC suppression curve, where it is less effective in detecting distant targets even when the rain and snow clutter is weak.

**Summary of the Invention**

To solve the above technical problem, the present invention provides a rain and snow clutter suppression algorithm for marine radar. By using a dual sliding window-based rain and snow clutter suppression algorithm, the algorithm weights the rain and snow clutter to suppress it as much as possible while reducing its impact on the targets, resulting in clearer and more realistic radar detection targets. The technical objective of the present invention is achieved through the following technical solutions.

According to an aspect of the invention, a rain and snow clutter suppression algorithm for marine radar, comprising the following steps:

S1, a radar antenna transmits a pulse signal to scan a surrounding environment to form a plurality of scanning lines, and each scanning line comprises a plurality of sampling points;
S2, within a rotation period of a radar antenna, performing pulse accumulation on a pulse signal transmitted at each azimuth to obtain radar echo data, so as to form digital scanning information;

S3, reading the scan line value D on the current and first three scan lines of the radar, $D=\{d_1, d_2, d_3...d_n\}$, where $d_n$ are the amplitude values of the points on the scan lines;

S4, reading the normalized value Rain of the current rain and snow clutter suppression parameter;

S5, establishing a sliding window matrix I according to target points on the first three scanning lines of the current scanning line and two points, before and after the target point, on the three scanning lines, where the target points lack adjacent points and complement adjacent points with an amplitude value of 0, and calculating an inner amplitude average value $\overline{F_{1n}}$ of the sliding window matrix I;

S6, establishing a sliding window matrix II according to a target point on a current scanning line and two points adjacent to the target point before and after the current scanning line; if the target point lacks adjacent points, supplementing adjacent points with an amplitude value of 0, and calculating an average value $\overline{F_{2n}}$ of amplitudes of the sliding window matrix II;

S7, calculating a weighted amplitude value $v_n$ of a target point of rainy snow noise wave on the current scanning line, where n = 1, 2, 3... n, $v_n=(1+K)* (\overline{F_{1n}} - K*\overline{F_{2n}})$, where K = 0.8*Rain + 0.2;

S8, taking the next point adjacent to the target point as the target point, repeating steps S3-S7, and calculating the weighted amplitude $v_n$ (n = 1, 2, 3... n) of the rain and snow clutter of all the target points on the current scanning line;

S9, calculating the amplitude matrix A, A = D-V after the current scan line rain and snow are suppressed, wherein V is the current echo scan line numerical matrix, and $V=\{v_1, v_2, v_3...v_n\}$.

According to some embodiments, the span of the sliding window matrix I is three adjacent scanning lines and three adjacent points on each scanning line; The span of the sliding window matrix II is three points on a scan line and a scan line.

According to some embodiments, said target point starts from the first point on the scanning line, and after the calculation of the rainbow wave weighted amplitude value of each target point is completed, the next point adjacent to the target point along the scanning line is taken as the target point.

According to some embodiments, the sliding window matrix I and the sliding window matrix II are simultaneously established.

According to some embodiments, Rain is a normal value that the ship currently inputs.

According to some embodiments, the algorithm further comprises: performing non-negative processing on the amplitude matrix A after rain and snow clutter suppression, wherein a value less than 0 in the amplitude matrix is zeroed out.

Compared to the prior art, the beneficial effects of the present invention are as follows:

1. The rain and snow clutter suppression algorithm for marine radar of the present invention utilizes two sliding windows and assigns weights to estimate the rain and snow clutter, making the estimated clutter closer to the actual characteristics of rain and snow echoes. It retains the amplitude of target echoes while suppressing rain and snow clutter as much as possible, minimizing the impact on the targets.

2. The method of the present invention has a particularly small computational load, high real-time performance, and does not require caching excessive echo data. It can be easily implemented and ported to embedded platforms with limited resources and computational capabilities.

3. This method proposes the collaborative use of two windowing techniques for rain and snow clutter estimation. Compared to traditional constant false alarm rate (CFAR) processing, this method demonstrates more prominent performance for rain and snow clutter following the Weibull distribution.

## Brief Description of the Drawings

Figure 1 illustrates the flowchart of the rain and snow clutter suppression algorithm for marine radar according to the present invention;

Figure 2 shows the schematic diagram of the sliding window positions in an embodiment of the present invention;

Figure 3 illustrates the radar display obtained from pre-testing the marine radar using the rain and snow clutter suppression algorithm of the present invention;

Figure 4 shows the radar display obtained after testing the marine radar using the rain and snow clutter suppression algorithm of the present invention.

**Detailed Description of Embodiments**

The following description further explains the technical solution of the present invention in conjunction with specific embodiments.

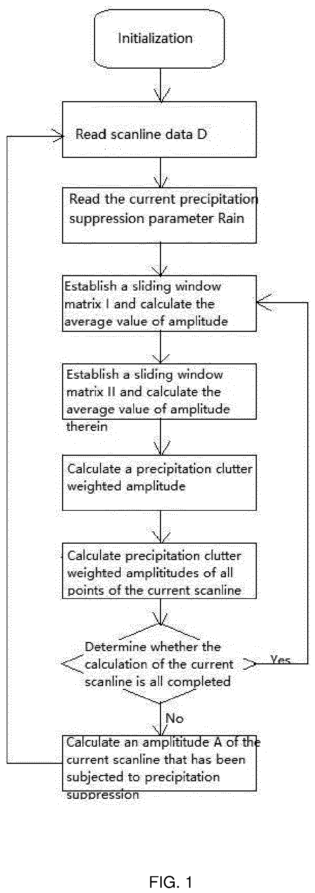

A rain and snow clutter suppression algorithm for marine radar, as shown in Figure 1, includes the following steps: S1. The radar antenna scans the surrounding environment in a clockwise manner by transmitting pulse signals. During the rotating scan, the environment is probed at a specific frequency related to the selected range. The receiver processes the analog echoes through mixing, amplification, detection, AD sampling, quantization, and encoding, converting them into digital signals to form discrete scan line information.

Each antenna rotation period samples 4096 scan lines, and each scan line includes 1024 sampling points (or 2048 points, depending on the selected range). As the antenna rotates, each scan line is updated in real-time for the corresponding azimuth.

S2. Within the antenna rotation period, the pulse sequences transmitted in specific directions are pulse accumulated to obtain radar echo data with higher signal-to-noise ratio, forming the final digital scan information.

S3. Read the values D of the current and previous three echo scan lines of the marine radar, where D = {$d_1$, $d_2$, ..., $d_n$}. Each value represents the amplitude of a point on the scan line, with $d_1$ representing the amplitude of the first point on the echo scan line, $d_2$ representing the amplitude of the second point, and so on.

S4. Read the normalized value Rain of the current rain and snow suppression parameter. Rain is a variable constant whose value is adjusted and set by the driver based on the current navigation conditions.

S5. Based on the target points on the current three scan lines and the adjacent two points before and after these target points, establish sliding window matrix I. The target points start from the first point on the scan line and are updated after the calculation of the weighted amplitude of rain and snow clutter. This process continues until the last point on the scan line becomes the target point. When the first and last points are target points, there will be a missing adjacent point. In this case, a point with a fixed amplitude of 0 is added as the adjacent point. The average amplitude $\overline{F_{1n}}$ of the nine points on the three scan lines within sliding window matrix I is calculated.

S6. Based on the target point on the current scan line and the two adjacent points before and after this target point, establish sliding window matrix II. Sliding window matrix II is established simultaneously with sliding window matrix I. Sliding window matrix I is based on historical data, while sliding window matrix II is based on current data. The target point starts from the first point on the current scan line and is updated after the calculation of the weighted amplitude of rain and snow clutter. This process continues until the last point on the scan line becomes the target point. When the first and last points are target points, there will be a missing adjacent point. In this case, a point with an amplitude of 0 is added as the adjacent point. The average amplitude $\overline{F_{2n}}$ of the three points on the scan line within sliding window matrix II is calculated.

S7. Calculate the weighted amplitude $v_n$ of rain and snow clutter for the current target point based on the mean amplitude $\overline{F_{1n}}$ within sliding window matrix I and the mean amplitude $\overline{F_{2n}}$ within sliding window matrix II, where n = 1, 2, 3, ..., n; $v_n = (1 + K)*(\overline{F_{1n}} - K * \overline{F_{2n}})$, where K = 0.8*Rain + 0.2.

S8. Take the next point adjacent to the target point as the new target point and repeat steps S3-S7. Calculate the weighted amplitude $v_n$ of rain and snow clutter for all target points on the current scan line (n = 1, 2, 3, ..., n). In other words, calculate the weighted amplitude of rain and snow clutter for each point on the current scan line as a target point. S9. Calculate the amplitude matrix A after rain and snow suppression for the current scan line, A = D - V, where V is the numerical matrix of the current echo scan line, V= {$v_1, v_2, v_3, ..., v_n$}. Perform non-negative processing on the amplitude matrix A after rain and snow suppression, setting any values less than 0 to 0.

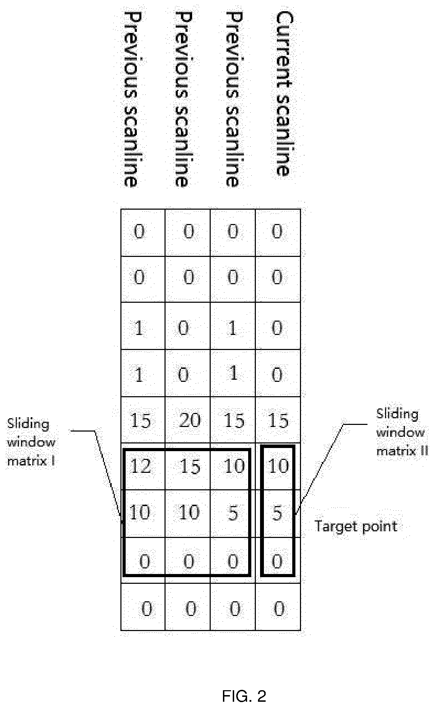

The following specific example illustrates the present invention, as shown in Figure 2.

Assuming the scan line is $D_n$, and the amplitude matrix for the current scan line is $D_n$ = {5, 10, 15}. The first three scan lines are represented as $D_{n-1}$, $D_{n-2}$, $D_{n-3}$, and, respectively, with amplitudes of $D_{n-1}$ = {5, 10, 15}, $D_{n-2}$ = {10, 15, 20}, and $D_{n-3}$ = {10, 12, 15}.

Read the normalized rain and snow suppression parameter value Rain. In this embodiment, Rain = 0.7.

Construct sliding window matrix I. Since the first point lacks adjacent points, add a neighboring point with an amplitude of 0. The numerical values of sliding window matrix I are $D_{1n}$ = {0, 0, 0, 10, 10, 5, 12, 15, 10}, where the amplitude of the first point of Dn-1 is 5, and its adjacent points have amplitudes of 0 and 10, respectively (0 being the supplementary amplitude). The amplitude of the first point on $D_{n-2}$ is 10, and the amplitudes of its two adjacent points are 0 and 15 respectively, 0 is the supplementary amplitude; the amplitude of the first point on $D_{n-3}$ is 10, its The amplitudes of the two adjacent points are 0 and 12 respectively, and 0 is the supplementary amplitude, then the average value of the amplitude of the sliding window matrix I is $\overline{F_{1n}} = \frac{0+0+0+10+10+5+12+15+10}{9} \approx 6.9$

. Construct sliding window matrix II. Since the first point lacks adjacent points, add a neighboring point with an

5

amplitude of 0. The numerical values of sliding window matrix II are $D_{2n} = \{0, 5, 10\}$, where 0 is the added amplitude, 5 is the amplitude of the first point of $D_n$, and 10 is the amplitude of the second point of $D_n$. The amplitude average of

$$\overline{F_{2n}} = \frac{0+5+10}{3} = 5$$

sliding window matrix II is .

The weighted amplitude v1 of rain and snow clutter for the first point on the current scan line is $v_1 = (1+K) * (\overline{F_{1n}} - K * \overline{F_{2n}})$, where K is a constant. In this embodiment, K = 0.8*Rain + 0.2 = 0.8 * 0.7 + 0.2 = 0.76. Substituting the value of K into the calculation, $v_1 \approx 5.5$.

Following the same method, when the second point is the target point,

$$\overline{F_{1n}} = \frac{10+10+5+12+15+10+15+20+15}{9} \approx 12, \quad \overline{F_{2n}} = \frac{5+10+15}{3} = 10, \quad v2 \approx 7.7$$

.

When the third point is the target point, $\overline{F_{1n}} = \frac{12+15+10+15+20+15+0+0+0}{9} \approx 9.7, \quad \overline{F_{2n}} = \frac{10+15+0}{3} \approx 8$,

$v_3 \approx 6.4$. The estimated matrix of rain and snow clutter values for all points on the current scan line $D_n$ is V = {5.5, 7.7, 6.4}. Then, calculate the amplitude matrix A after rain and snow suppression for the current scan line. A = {-0.5, 2.3, 8.6}. If the calculation result is negative, set it to 0. Therefore, A = {0, 2.3, 8.6}. Use the amplitude matrix A after rain and snow suppression instead of the echo scan line numerical values D to reduce the impact of rain, snow, and other factors on radar detection accuracy and improve radar display accuracy.

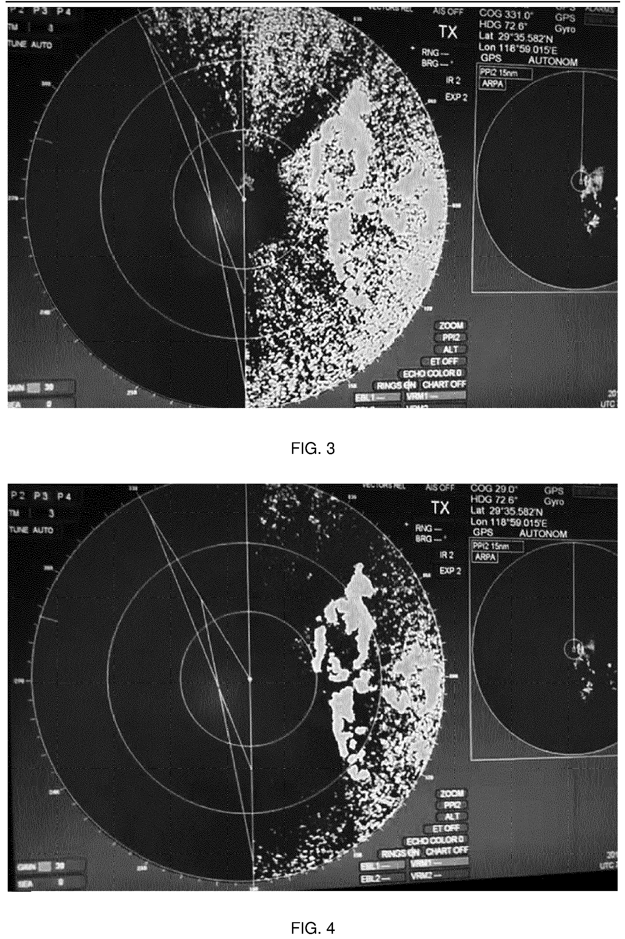

Figure 3 and Figure 4 show the radar display before and after using the rain and snow clutter suppression algorithm for marine radar of the present invention. The white area in the figures is significantly reduced, resulting in clearer scan results.

This embodiment is only a further explanation of the present invention and should not be considered as limiting the scope of the invention. Those skilled in the art can make non-inventive modifications to this embodiment after reading this specification, as long as they fall within the scope of the claims of the present invention, which are protected by patent law.

**Claims**

1. A rain and snow clutter suppression algorithm for marine radar, comprising the following steps:

   S1, a radar antenna transmits a pulse signal to scan a surrounding environment to form a plurality of scanning lines, and each scanning line comprises a plurality of sampling points;
   S2, within a rotation period of a radar antenna, performing pulse accumulation on a pulse signal transmitted at each azimuth to obtain radar echo data, so as to form digital scanning information;
   S3, reading the scan line value D on the current and first three scan lines of the radar, D = {$d_1$, $d_2$, $d_3$...$d_n$}, where $d_n$ are the amplitude values of the points on the scan lines;
   S4, reading the normalized value Rain of the current rain and snow clutter suppression parameter;
   S5, establishing a sliding window matrix I according to target points on the first three scanning lines of the current scanning line and two points, before and after the target point, on the three scanning lines, where the target points lack adjacent points and complement adjacent points with an amplitude value of 0, and calculating an inner amplitude average value $\overline{F_{1n}}$ of the sliding window matrix I;
   S6, establishing a sliding window matrix II according to a target point on a current scanning line and two points adjacent to the target point before and after the current scanning line; if the target point lacks adjacent points, supplementing adjacent points with an amplitude value of 0, and calculating an average value $\overline{F_{2n}}$ of amplitudes of the sliding window matrix II;
   S7, calculating a weighted amplitude value $v_n$ of a target point of rainy snow noise wave on the current scanning

   $$v_n = (1+K) * (\overline{F_{1n}} - K * \overline{F_{2n}})$$

   line, where n = 1, 2, 3... n, , where K= 0.8*Rain + 0.2;
   S8, taking the next point adjacent to the target point as the target point, repeating steps S3-S7, and calculating the weighted amplitude $v_n$ (n = 1, 2, 3... n) of the rain and snow clutter of all the target points on the current scanning line;
   S9, calculating the amplitude matrix A, A = D-V after the current scan line rain and snow are suppressed, wherein V is the current echo scan line numerical matrix, and V = {$v_1$, $v_2$, $v_3$...$v_n$}.

**2.** The algorithm according to claim 1, wherein the span of the sliding window matrix I is three adjacent scanning lines and three adjacent points on each scanning line; The span of the sliding window matrix II is three points on a scan line and a scan line.

**3.** The algorithm according to claim 2, **characterized in that** said target point starts from the first point on the scanning line, and after the calculation of the rainbow wave weighted amplitude value of each target point is completed, the next point adjacent to the target point along the scanning line is taken as the target point.

**4.** The algorithm according to claim 1, wherein the sliding window matrix I and the sliding window matrix II are simultaneously established.

**5.** The algorithm according to claim 1, wherein Rain is a normal value that the ship currently inputs.

**6.** The algorithm according to claim 1, **characterized in that** the algorithm further comprises: performing non-negative processing on the amplitude matrix A after rain and snow clutter suppression, wherein a value less than 0 in the amplitude matrix is zeroed out.

FIG. 1

FIG. 2

FIG. 3

FIG. 4

## INTERNATIONAL SEARCH REPORT

| International application No. |
| --- |
| **PCT/CN2021/113493** |

**A.    CLASSIFICATION OF SUBJECT MATTER**

G01S 13/937(2020.01)i

According to International Patent Classification (IPC) or to both national classification and IPC

**B.    FIELDS SEARCHED**

Minimum documentation searched (classification system followed by classification symbols)

G01S

Documentation searched other than minimum documentation to the extent that such documents are included in the fields searched

Electronic data base consulted during the international search (name of data base and, where practicable, search terms used)

CNTXT, ENTXTC, WPABSC: 中船航海, 雷达, 杂波, 扫描线, 抑制, 滑窗, 幅值, 幅度, 加权, 权值, 权重, 韦布尔分布, radar, clutter, restrain+, suppress+, scan+, amplitude, value, weight+

**C.    DOCUMENTS CONSIDERED TO BE RELEVANT**

| Category* | Citation of document, with indication, where appropriate, of the relevant passages | Relevant to claim No. |
| --- | --- | --- |
| PX | CN 112799070 A (CSSC MARINE TECHNOLOGY CO., LTD.) 14 May 2021 (2021-05-14) claims 1-6, description paragraphs 1-27, and figures 1-4 | 1-6 |
| A | CN 108318866 A (XIDIAN UNIVERSITY) 24 July 2018 (2018-07-24) entire document | 1-6 |
| A | CN 106249211 A (NO.28 RESEARCH INSTITUTE OF CHINA ELECTRONICS TECHNOLOGY GROUP CORP.) 21 December 2016 (2016-12-21) entire document | 1-6 |
| A | CN 102176000 A (UNIVERSITY OF ELECTRONIC SCIENCE AND TECHNOLOGY OF CHINA) 07 September 2011 (2011-09-07) entire document | 1-6 |
| A | US 5563604 A (ALLIEDSIGNAL INC.) 08 October 1996 (1996-10-08) entire document | 1-6 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **04 January 2022** | **11 January 2022** |

| Name and mailing address of the ISA/CN | Authorized officer |
| --- | --- |
| **China National Intellectual Property Administration (ISA/CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

INTERNATIONAL SEARCH REPORT
Information on patent family members

International application No.

**PCT/CN2021/113493**

| Patent document cited in search report | | | Publication date (day/month/year) | Patent family member(s) | | | Publication date (day/month/year) |
|---|---|---|---|---|---|---|---|
| CN | 112799070 | A | 14 May 2021 | CN | 112799070 | B | 10 September 2021 |
| CN | 108318866 | A | 24 July 2018 | CN | 108318866 | B | 08 October 2021 |
| CN | 106249211 | A | 21 December 2016 | CN | 106249211 | B | 23 October 2018 |
| CN | 102176000 | A | 07 September 2011 | CN | 102176000 | B | 28 November 2012 |
| US | 5563604 | A | 08 October 1996 | WO | 9624858 | A1 | 15 August 1996 |
| | | | | EP | 0808463 | A1 | 26 November 1997 |
| | | | | EP | 0808463 | B1 | 31 May 2000 |
| | | | | DE | 69608667 | E | 06 July 2000 |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 201910656437

- CN 201410375937